Europäisches Patentamt

(19) European Patent Office

Office européen des brevets

(11) Publication number: **0 242 976**
**B1**

# EUROPEAN PATENT SPECIFICATION

(45) Date of publication of the patent specification:
**04.07.90**

(51) Int. Cl.⁵: **A23L 1/30**

(21) Application number: **87302271.9**

(22) Date of filing: **17.03.87**

## (54) Health food.

(30) Priority: **24.03.86 JP 66823/86**

(43) Date of publication of application:
**28.10.87 Bulletin 87/44**

(45) Publication of the grant of the patent:
**04.07.90 Bulletin 90/27**

(84) Designated Contracting States:
**DE FR GB IT**

(56) References cited:
**FR-A- 2 201 043**
**FR-A- 2 527 424**

**CHEMICAL ABSTRACTS, vol. 89, 1978, page 374,**
**abstract no. 186068u, Columbus, Ohio, US**

(73) Proprietor: **TOKIWA KANPO PHARMACEUTICAL CO.,**
**LTD., No. 10-8 Abikohigashi 2-chome Sumiyoshi-ku,**
**Osaka-shi Osaka-fu(JP)**

(72) Inventor: **Harima, Shoichi, No. 3-10-401,**
**Tosabori 3-chome Nishi-ku, Osaka-shi Osaka-fu(JP)**

(74) Representative: **Perry, Robert Edward et al, GILL**
**JENNINGS & EVERY 53-64 Chancery Lane, London**
**WC2A 1HN(GB)**

## Description

The present invention relates to a health food.

It is well known that the inhalation of tobacco smoke has harmful effects which are attributed to nicotine or carbon monoxide. It is not easy for smokers to stop the habit of smoking, nor has there been any easily practicable means to eliminate the harmful effects without discontinuing smoking. Moreover, one of the factors which makes smokers hesitate to discontinue smoking is the common belief that their body weight would increase in consequence.

FR-A 2 527 424 discloses that "ginseng" contains saponin, minerals and vitamin B and is useful for treating anaemia, hypotension, diabetes, stress-related problems and fatigue, and as a stomach tonic. The same document discloses that "consude" is a natural product having a high nutritive value, which is rich in vitamins B and C, chlorophyll, proteins, calcium and iron, and is useful for treating hypertension, anaemia, liver problems and gastro-enteric problems.

Chemical Abstracts 89 (1978) 18608u discloses the use of extracts of comfrey as an anti-tumour agent.

The present invention is based on the unusual precept of using a food to prevent the harmful effects of smoking. Of course, eating does not interfere with the smoking habit itself. It is an object of the present invention to reduce the harmful effects of nicotine and carbon monoxide, and to prevent obesity.

A health food according to the present invention comprises:

(A) an aqueous extract of (i) comfrey, (ii) perilla, and (iii) field mint;

(B) wheat protein or soybean protein; and

(C) a saponin.

The health food of the present invention may be prepared by adding an aqueous solvent to a mixture of dry powders of each of comfrey, perilla and field mint, the protein and the saponin, followed by treatment for sufficient time to dissolve extractable components, separating the thus-produced solution containing the extractable components from solid materials, concentrating the solution, and drying the concentrate to form a solid product.

The comfrey, component (i), can be in the form of dried leaves of a plant Symphytum officinale or S. asperum) commercialised by the name of "comfrey".

The perilla, component (ii), is for example the dried leaves and twigs of Perilla frutescens var. acuta or a related plant (e.g. Forma crispa, Forma discolor, Forma viridis, Forma virdiscrispa) having the fragrance peculiar to the beefsteak plant.

The field mint, component (iii), is for example the dried aerial parts of Mentha arvensis var. piporasens, its varietas or forma or inter-species hybrids.

The wheat protein or soybean protein, component (B), can be a product commercialised by the name of "wheat protein" or "soybean protein", or protein obtainable as a precipitate by the steps of extracting defatted soybean with neutral or alkaline water and making the extract acidic (about pH 4.3). The soybean referred to herein includes varieties such as black soybean.

The saponin, component (C), is for example soybean saponin (e.g. obtained by treating the mother liquid from which the above soybean protein is separated with a non-polar or weakly polar resin, and eluting the adsorbed substance with a polar solvent; Japanese Patent Publication (Kokai) No. 33232/1984) or another saponin such as those obtained from Panax ginserg, P. japonicum, Ophiopogon japonicus var. genuinus or Gynostemmapentaphyllum.

In order to obtain the extract which is component (A), the components (i), (ii) and (iii) are mixed simultaneously or separately with an excess amount (e.g. 5 to 50 times by volume, preferably 15 to 25 times by volume) of water-based solvent (e.g. water alone or a mixture of water with a hydrophilic organic solvent such as methanol, ethanol or acetone). The mixture is treated between room temperature and 100 C (preferably at 50 to 80 C) for a sufficient period (e.g. 0.5 to 5 hours, preferably 1 to 3 hours) to dissolve extractable components, and the produced solution containing the extractable components is concentrated, preferably under reduced pressure. From the viewpoint of cost, it is advantageous to mix the components (i), (ii) and (iii) and extract them simultaneously. Further, in order to save the time and labour of independently effecting the mixing steps, it is preferable to mix in also the components (B) and (C), and any optional components (to be described later) before extracting. In this method, component (B) should be at least partly soluble in the water-based solvent.

The health food of the present invention may contain, in addition to the above components, any of various optional components. Preferred such components are (a) vitamin C, (b) vitamin $B_1$, (c) vitamin $B_2$, (d) vitamin $B_6$, (e) peppermint oil, (f) vanilla essence, and (g) encapsulated powder of vegetable oil (preferably drying oil). However, since the given vitamins, (a) to (d), and the oil (g) can be taken from ordinary food, and (e) and (f) are perfumes, they are not essential components in the present invention. The amounts of the essential and optical components may in principle vary within a wide range, but preferable contents are (i) 10 to 70%, (ii) 1 to 30%, (iii) 1 to 25%, (B) 1 to 25%, (C) 1 to 30%, (a) to (d) 1 to 5%, (e) and (f) 1 to 10%, and (g) 1 to 25%, respectively by weight.

The mixture containing the above components may be used as such as the health food of the present invention. If desired, however, it may be formulated with conventional excipients such as lactose, corn starch, microcrystalline cellulose or magnesium stearate, into preparations ordinarily used as orally-administered medicaments such as powders, granules, tablets or capsules. It may also be mixed into sweets (e.g. yoghurt, candy, biscuits, jelly or chewing gum) or beverages (e.g. juice). Further, it may be mixed with other medicines, Chinese herbal remedy, etc.

As is evident from the experimental data given below, the health food of the present invention, when taken into a human body, reduces the blood nicotine level upon the simultaneous administration of nicotine. It also reduces the CO-hemoglobin content in blood when exposed to carbon monoxide. Accordingly, the health food of the present invention may be useful for reducing the harmful effects of smoking. Also, since it lowers the blood nicotine level, it may reduce the addictive effect of nicotine, thereby making it easier for a smoker to discontinue smoking.

The use of the health food of the present invention does not require the smoker to discontinue the habit of smoking or to change the mode of smoking. Accordingly, it is possible to obtain good results apparently without interfering with the smoking habit. Further, the health food is not harmful even if it is habitually taken.

The health food of the present invention can inhibit increase in body weight. It may therefore help to overcome one of the smoker's perceived barriers to stopping smoking.

The following Examples illustrate the invention. All parts and percentages are by weight.

Examples 1 to 7

One part of a mixture having the composition shown in Table 1 was combined with 20 parts of water, and the combination was treated at 70 C for 1 hour. After centrifugation, the solids were combined with 20 parts of fresh water, and were re-extracted under the same conditions. The resulting product was centrifuged and, after discarding solid residue, two extracts were combined and concentrated under reduced pressure (4 to 6.7 kPa) at 45 to 50 C. The obtained solution was concentrated to about 30% solids content and spray-dried to give a solid (0.3 to 0.4 part). This product may be used as such as a health food; alternatively, it may be admixed with other components to form a pharmaceutical composition, food or soft drink.

TABLE 1

| Example | 1 | 2 | 3 | 4 | 5 | 6 | 7 |
|---|---|---|---|---|---|---|---|
| Dried comfrey leaf powder | 40 | 15 | 30 | 30 | 25 | 35 | 58 |
| Dried perilla leaf powder | 20 | 25 | 15 | 20 | 10 | 5 | 10 |
| Dried field mint leaf powder | 5 | 5 | 10 | 5 | 15 | 20 | 2 |
| Soybean protein | 10 | 15 | 10 | 20 | 20 | 5 | 10 |
| Soybean saponin | 10 | 15 | 10 | 5 | 20 | 25 | 2 |
| Vitamin C | 3 | 3 | 2 | 1 | 1 | 2 | 15 |
| Vitamin $B_1$ | 2 | 1 | 2 | 3 | 2 | 1 | 0 |
| Vitamin $B_2$ | 2 | 3 | 1 | 4 | 3 | 2 | 0 |
| Vitamin $B_6$ | 2 | 1 | 2 | 3 | 4 | 1 | 0 |
| Natural peppermint | 2 | 3 | 1 | 4 | 0 | 1 | 1 |
| Natural vanilla | 4 | 4 | 7 | 5 | 0 | 3 | 2 |
| Encapsulated vegetable oil powder | 0 | 10 | 0 | 0 | 0 | 0 | 0 |

| Example 8 | (Capsules) | |
|---|---|---|
| Solid (pulverised product of any of Examples 1 to 7 | 50 parts |
| Lactose | 49 parts |
| Magnesium stearate | 1 part |

The above components were mixed and filled into hard gelatine capsules.

| Example 9 | (Tablets) | |
|---|---|---|
| | Solid (pulverised product of any of Examples 1 to 7 | 25 parts |
| | Lactose | 100 parts |
| | Corn starch | 20 parts |
| | Magnesium stearate | 5 parts |

The above components were mixed, granulated and pressed into tablets according to conventional procedure.

| Example 10 | (Biscuits) | |
|---|---|---|
| | Solid (pulverised product of any of Examples 1 to 7 | 80 parts |
| | Wheat powder | 100 parts |
| | Shortening | 15 parts |
| | Condensed mild | 6 parts |
| | Sugar | 31 parts |
| | Sodium bicarbonate | 0.6 parts |
| | Butter | 10 parts |
| | Water | 6 parts |

The above components were mixed, kneaded, punched out into shapes, and baked, to give biscuits.

Testing

For each test, SPF animals, Wistar strain male rats, 6 weeks of age, were accommodated in wire net cages, 3 animals per cage in a room conditioned at 24 ± 1 C, humidity 55 ± 5%, fresh air ventilation 12 times/hour, illumination 12 hours/day (light on at 8.00 a.m., off at 8.00 p.m.). Nippon Clair's solid feed CE-1 and water were provided ad lib.

Test 1

The animals were acclimatised to the test environment for 2 weeks. The test substance (the solids obtained in Example 7) was suspended in distilled water for administration at the age of 8 weeks. The amount administered was 5.0 g/kg body weight. Intra-gastric administration was effected using a stomach tube. Nicotine was administered orally in the same manner in an amount of 3 mg/kg body weight.

Administration was carried out at 2.00 p.m. for a period of 7 days. On completion of the administration and termination of the test (1 week after the completion of the administration), a 1 ml blood sample was taken from the heart for determination of the nicotine level.

Observations were conducted immediately after administration and in the evening on the same day, and in the morning and evening thereafter. The animals were carefully observed both from outside the cage, and in the hand at the time of body weight measurement.

On the 10th day after the administration, the living animals were dissected, and samples for histological examination were collected. The blood was adjusted to pH 9 with dilute aqueous ammonia, held on an Extrelut column (Merck) for 15 minutes, and eluted with ethyl acetate (15 ml). The ethyl acetate was distilled off from the effluent under reduced pressure, and the residue was dissolved in 100 µl of ethyl acetate to give a sample for analysis. Analysis was by gas chromatography (Shimadzu Ge 6AM, with FID), using a glass column 2 m long and 3 mm in diameter filled with 2% Tharmon 1000 + 1% KOH on Chromosorb WAW (80/100 mesh). The column temperature was 100 C. As carrier gas, $N_2$ was used. The flow rate was 60 ml/min.

Body weight was measured (average value ± standard deviation) at the start ($M_0$) and at the completion of the administration ($M_{end}$); the results are shown in Table 2. The increase in body weight per day during the period of administration ($M_{inc}$/day) was about 22% lower in the administration group than in the control group. The level of significance $P < 0.05$.

TABLE 2

| Group | $M_0$ (g) | $M_{end}$ (g) | $M_{inc}$ (g/day) |
|---|---|---|---|
| Control | $238.6 \pm 11.4$ | $286.8 \pm 11.8$ | $6.9 \pm 0.7$ |
| Administration | $236.4 \pm 5.2$ | $274.4 \pm 11.0$ | $5.4 \pm 1.0$ |

The blood nicotine level (average value $\pm$ standard deviation) was measured at the completion of administration ($nic_{ad}$) and at the end of the test ($nic_{end}$); the results are shown in Table 3. The blood nicotine level at the completion of administration was about 44% lower in the administration group than in the control group. The level of significance $P < 0.01$.

TABLE 3

| Group | $nic_{ad}$ ($\mu g/ml$) | $nic_{end}$ ($\mu g/ml$) |
|---|---|---|
| Control | $13.96 \pm 3.38$ | $48.6 \pm 14.6$ |
| Administration | $7.85 \pm 1.87$ | $41.8 \pm 12.5$ |

Anatomical observation showed, after administration, no macroscopical abnormality in any individual in each group.
Test 2

The animals were acclimatised to the test environment for 2 weeks. The test substance (the solids obtained in Example 7) was administered, at the age of 8 weeks, as a suspension in distilled water. The amount administered was 5 g/kg body weight. The substance was administered orally into the stomach, using a stomach tube, for 7 days.

On the day following completion of administration, each animal was accommodated in a chamber into which a gas containing 21% $O_2$ and 100 ppm CO was introduced by a pump, so that the animals should inhale the gas for 5 minutes. The concentration of CO in the chamber was monitored by a carbon monoxide measuring apparatus (COM-4 made by Komei Rikagaku Kogyo).

Immediately after completion of the exposure, blood samples were taken from the heart. A blood sample (0.5 ml) was put in a reaction vial (5 ml volume), and one drop of octyl alcohol and 0.25 ml of saturated aqueous potassium ferricyanate were added. The vial was stoppered and shaken for 5 minutes, after which the gas phase was used for analysis. Analysis was made by gas chromatography (Shimadzu Gc 6A, with TCD) using a glass column 2 m long and 3 mm in diameter filled with molecular sieve 5A (3/60 mesh); the column temperature was 60 C, the carrier gas was $H_2$, and the flow rate was 50 ml/min.

the blood CO level (CO-Hb concentration after the test (average value $\pm$ standard deviation) was $53.8 \pm 9.5\%$ for the administration group, about 23% lower than the value ($69.9 \pm 7.2\%$) for the control group. Significance level $P < 0.05$.

## Claims

1. A health food which comprises:
(A) an aqueous extract of (i) comfrey, (ii) perilla and (iii) field mint;
(B) wheat protein or soybean protein; and
(C) a saponin.

2. A health food according to claim 1, wherein the proportions of the respective components are: (i) 10 to 70%, (ii) 1 to 30%, (iii) 1 to 25%, (B) 1 to 25% and (C) 1 to 30%.

3. A health food according to claim 1 or claim 2, which additionally comprises one or more of (a) vitamin C, (b) vitamin $B_1$, (c) vitamin $B_2$, (d) vitamin $B_6$, (e) peppermint oil, (f) vanilla essence and (g) encapsulated vegetable oil powder.

4. A health food according to claim 3, wherein the proportion of each additional component is (a) 1 to 5%, (b) 1 to 5%, (c) 1 to 5%, (d) 1 to 5%, (e) 1 to 10%, (f) 1 to 10% and (g) 1 to 25%.

5. A health food according to any preceding claim, in orally-acceptable form, which additionally comprises a sweetening agent.

6. A health food according to any preceding claim, in the form of granules, tablets or capsules.

7. A health food according to any of claims 1 to 5, in the form of a powder.

8. A health food according to claim 5, in the form of a beverage.

9. A process for preparing a health food according to any preceding claim, which comprises producing the aqueous extract and, during extraction, adding the protein and the saponin.

10. A process for preparing a health food according to any of claims 1 to 8, which comprises adding an aqueous solvent to a mixture of dry powders of each of comfrey, perilla and field mint, the protein and the saponin, followed by treatment for sufficient time to dissolve extractable components, separating the thus-produced solution containing the extractable components from solid materials, concentrating the solution, and drying the concentrate to form a solid product.

## Patentansprüche

1. Heilnahrungsmittel, umfassend
(A) einen wäßrigen Extrakt von
   (i) Schwarzwurz,
   (ii) Perilla und
   (iii) Feldminze;
(B) Weizen-Protein oder Sojabohnen-Protein; und
(C) ein Saponin.

2. Heilnahrungsmittel nach Anspruch 1, worin die Anteile der betreffenden Komponenten betragen:
(i) 10 bis 70%,
(ii) 1 bis 30%,
(iii) 1 bis 25%,
(B) 1 bis 25% und
(C) 1 bis 30%.

3. Heilnahrungsmittel nach Anspruch 1 oder Anspruch 2, zusätzlich umfassend einen oder mehrere der Bestandteile
(a) Vitamin C,
(b) Vitamin B$_1$,
(c) Vitamin B$_2$,
(d) Vitamin B$_6$,
(e) Pfefferminzöl,
(f) Vanille-Essenz und
(g) verkapseltes Pflanzenöl-Pulver

4. Heilnahrungsmittel nach Anspruch 3, worin die Anteile jedes zusätzlichen Bestandteils betragen:
(a) 1 bis 5%,
(b) 1 bis 5%,
(c) 1 bis 5%,
(d) 1 bis 5%,
(e) 1 bis 10%,
(f) 1 bis 10% und
(g) 1 bis 25%.

5. Heilnahrungsmittel nach irgendeinem vorhergehenden Anspruch in einer oral annehmbaren Form, die zusätzlich ein Süßungsmittel umfaßt.

6. Heilnahrungsmittel nach irgendeinem vorhergehenden Anspruch in Form von Granulat, Tabletten oder Kapseln.

7. Heilnahrungsmittel nach irgendeinem der Ansprüche 1 bis 5 in Form eines Pulvers.

8. Heilnahrungsmittel nach Anspruch 5 in Form eines Getränks.

9. Verfahren zur Herstellung eines Heilnahrungsmittels nach irgendeinem vorhergehenden Anspruch, umfassend die Herstellung eines wäßrigen Extrakts und während der Extraktion das Hinzufügen des Proteins und des Saponins.

10. Verfahren zur Herstellung eines Heilnahrungsmittels nach irgendeinem der Ansprüche 1 bis 8, umfassend das Hinzufügen eines wäßrigen Lösungsmittels zu einer Mischung trockener Pulver jedes der Bestandteile Schwarzwurz, Perilla und Feldminze, des Proteins und des Saponins und anschließend die Behandlung während einer Zeitdauer, die zur Auflösung der extrahierbaren Komponenten ausreicht, die Abtrennung der so erhaltenen, die extrahierbaren Komponenten enthaltenden Lösung von den festen Stoffen, die Konzentrierung der Lösung und das Trocknen des Konzentrats zur Bildung eines festen Produkts.

## Revendications

1. Produit diététique comportant:
(A) un extrait aqueux de (i) consoude, (ii) pérille et de menthe sauvage;
(B) de protéine de blé ou de soja; et
(C) de saponine.

2. Produit diététique selon la lère revendication, les proportions des éléments respectifs étant: (i) 10 à 70%, (ii) 1 à 30%, (iii) 1 à 25%, (B) 1 à 25% et (C) 1 à 30%.

3. Produit diététique selon la lère ou 2ème revendication, comportant en supplément un ou plusieurs des éléments suivants: (a) vitamine C, (b) vitamine B$_1$, (c) vitamine B$_2$, (d) vitamine B$_6$, (e) essence de menthe poivrée, essence de vanille et (g) poudre d'huile végétale en gellule.

4. Produit diététique selon la 3ème revendication, la proportion de chaque élément complémentaire étant de (a) 1 à 5%, (b) 1 à 5%, (c) 1 à 5%, (d) 1 à 5%, (e) 1 à 10%, (f) 1 à 10% et (g) 1 à 25%.

5. Produit diététique selon l'une ou l'autre des revendications ci-avant, admissible par voie buccale, comportant également un produit édulcorant.

6. Produit diététique selon l'une ou l'autre des revendications ci-avant, sous forme de granulés, pillules ou gellules.

7. Produit diététique selon l'une ou l'autre de la lère à la 5ème revendication, sous forme de poudre.

8. Produit diététique selon la 5ème revendication, sous forme de boisson.

9. Procédé de préparation de produit diététique selon l'une ou l'autre des revendications ci-avant, comportant la préparation de l'extrait aqueux et lors de l'extraction, l'adjonction de protéine et de saponine.

10. Procédé de préparation de produit diététique selon l'une ou l'autre des revendications ci-avant, comportant l'adjonction d'un solvant aqueux à un mélange de poudres sèches de chacun des éléments de consoude, pérille et menthe sauvage, de protéine et de saponine, suivi du traitement de durée suffisante pour dissoudre les éléments extraits, la solution contenant les éléments extraits ainsi obtenue étant séparée des matières solides, la solution étant alors concentrée et le concentré étant séché pour former un produit solide.